# EUROPÄISCHE PATENTSCHRIFT

(11) **EP 1 202 434 B1**
(45) Veröffentlichungstag und Bekanntmachung des Hinweises auf die Patenterteilung: **01.02.2006**
(21) Anmeldenummer: 01124818.4
(22) Anmeldetag: 18.10.2001
(51) Int. Cl.: H02K 5/173

(54) **Elektromotor, insbesondere Motorspindel zum Antrieb eines Bearbeitungswerkzeugs**
Electric motor, especially for driving a machining tool
Moteur électrique, en particulier pour un outil d'usinage

(30) Priorität: 25.10.2000 DE 10052956
(43) Veröffentlichungstag der Anmeldung: 02.05.2002
(73) Patentinhaber: Jäger, Alfred, 61239 Ober-Mörlen (DE)
(72) Erfinder: Jäger, Alfred, 61239 Ober-Mörlen (DE)
(74) Vertreter: Haar, Lucas Heinz Jörn

(56) Entgegenhaltungen:
- FR-A- 2 369 059
- US-A- 3 826 545
- PATENT ABSTRACTS OF JAPAN vol. 1999, no. 12, 29. Oktober 1999 (1999-10-29) & JP 11 179603 A (TOSHIBA MACH CO LTD), 6. Juli 1999 (1999-07-06) -& US 6 158 895 A (TOSHIBA KIKAI K) 12. Dezember 2000 (2000-12-12)

## Beschreibung

Die Erfindung betrifft einen Elektromotor, insbesondere eine Motorspindel zum Antrieb eines Bearbeitungswerkzeugs, mit einem Gehäuse, dessen Temperatur mittels einer Kühleinrichtung im wesentlichen konstant gehalten wird und mit einem Rotor, der in dem Gehäuse an zwei im Abstand voneinander befindlichen Lagerstellen mittels Wälzlagern gelagert ist, wobei zwischen den Lagerstellen die Statorwicklung und die Rotorwicklung angeordnet sind und die Wälzlager beider Lagerstellen in O-Anordnung mit Vorspannung gegeneinander gestellt sind.

Ein Elektromotor der eingangs genannten Art ist aus FR-A-2369059 bekannt. Derartige Elektromotoren werden unter anderem zum Antrieb von mit hoher Drehzahl umlaufenden Bearbeitungswerkzeugen, z.B. Bohr-, Fräs- oder Schleifwerkzeugen, eingesetzt. Die Welle des Rotors des Elektromotors bildet hierbei zugleich die Spindel für den Antrieb der Werkzeuge und muß daher robust und spielfrei gelagert sein. Zur Lagerung der Welle ist es bekannt, gegeneinander gestellte Schulterkugellager oder Schrägkugellager zu verwenden, wobei das oder die Lager an einer Lagerstelle im Gehäuse axial verschiebbar gelagert sind und mit Hilfe von Axialdruckfedern gegen die Lager der anderen Lagerstelle vorgespannt sind. Durch diese bekannte Anordnung wird der Einfluß von Temperaturänderungen auf die Lagervorspannung klein gehalten. Der Bauaufwand für die federnde Vorspannungseinrichtung und die Schwingungsempfindlichkeit der federnden Vorspannungseinrichtung wird jedoch als nachteilig angesehen.

Aus US-A-3 826 654 ist eine Anordnung mit zwei im Abstand voneinander angeordneten Kugellagern bekannt, bei der die inneren Laufbahnen der Kugeln aus in eine Welle eingearbeiteten Nuten bestehen und die äußeren Laufringe nur eine Schulter haben, die sich auf den einander zugekehrten Seiten der Laufringe befinden. Zwischen den Laufringen befindet sich eine geteilte oder radial geschlitzte Abstandshülse, die nach dem Anbringen der Lager auf der Welle eingebaut wird und den Abstand der Laufringe bestimmt. Zum Ausgleich von Temperaturunterschieden zwischen der Welle und dem die Lageranordnung aufnehmenden Gehäuse ist der Druckwinkel der Lager derart auf das Verhältnis von Lagerdurchmesser zu Lagerabstand abgestimmt, dass die Verringerung des vorhandenen Lagerspiels durch radiale Ausdehnung der Kugeln und der Welle ungefähr die gleiche Größenordnung hat wie die durch axiale Ausdehnung der Welle verursachte Zunahme des Lagerspiels, so dass dieses im wesentlichen konstant bleibt.

Es ist weiterhin eine Spindellagerung mit einem Paar Kugellagern in O-Anordnung bekannt (Patent Abstracts of Japan Bd 1999, No. 12, 29. Oktober 1999 (1999-10-29) & JP 11 179 603 A) bei welcher zwischen den inneren Laufringen der gegeneinander gespannten Kugellager ein kürzerer Zwischenring angeordnet ist als zwischen den äußeren Laufringen, so dass die Lager vorgespannt sind. Der äußere Zwischenring kann einen geringeren thermischen Ausdehnungskoeffizienten haben als die Spindel oder derart gekühlt sein, dass sich bei einer Erwärmung des Lagers die Lagervorspannung.und damit die Lagerbelastung verringert.

Der Erfindung liegt die Aufgabe zugrunde, einen Elektromotor der eingangs genannten Art zu schaffen, der sich durch einen einfachen, kostengünstig herstellbaren Aufbau und eine schwingungsunempfindliche robuste Lagerung des Rotors auszeichnet.

Diese Aufgabe wird bei einem Elektromotor der eingangs genannten Art dadurch gelöst, daß an beiden Lagerstellen die Außenringe der Wälzlager in dem Gehäuse und die Innenringe der Wälzlager auf dem Rotor unverschiebbar befestigt sind und zwischen den Außenringen der Wälzlager ein paßgenaues Bauteil, das die Statorwicklung umgibt, und zwischen den Innenringen der Wälzlager ein zweites paßgenaues Bauteil innerhalb der Rotorwicklung drehfest auf der Welle angeordnet ist und daß die Abstände der Innenringe und der Außenringe der Wälzlager zwischen den Lagerstellen so groß bemessen ist, daß eine Erhöhung der Vorspannung infolge der radialen thermischen Ausdehnung der Innenringe der Wälzlager bei Erwärmung des Rotors durch die thermische Längenausdehnung des Rotors im wesentlichen kompensiert wird.

Bei dem erfindungsgemäßen Elektromotor wird die Vorspannung der gegeneinander gestellten Wälzlager ausschließlich durch die exakte Positionierung der Außenringe und Innenringe des Lagers im Gehäuse bzw. auf der Rotorwelle in Verbindung mit der vergleichsweise sehr geringen Elastizität der die Wälzlager aneinander abstützenden Gehäuse- bzw. Rotorbauteile erzeugt. Dehnen sich die Innenringe der Wälzlager infolge der Erwärmung des Rotors aus, während die in dem gekühlten Gehäuse angeordneten Außenringe ihren Durchmesser beibehalten, so würde dies zu einer Erhöhung der Lagervorspannung bei gleichzeitiger Verlagerung der Kugeldruckpunkte an Innen- und Außenring und zu einer entsprechend höheren Lagerbelastung führen. Aufgrund der erfindungsgemäßen Bemessung des Lagerabstands werden jedoch die Innenringe der Wälzlager durch die axiale Ausdehnung des Rotors im Gegensatz zu den Außenringen gerade soweit auseinander bewegt, daß der maximale Abstand zwischen den Kugellaufflächen der Innenringe und denen der Außenringe im wesentlichen unverändert beibehalten wird, wobei sich allenfalls die Kugeldruckpunkte auf den Innen- und Außenringen etwas verlagern. Auf diese Weise bleibt die Vorspannung der Lager und damit die hierauf beruhende Lagerbelastung auch bei Erwärmung des Rotors im wesentlichen gleich.

Der zur Verwirklichung der Erfindung geeignete Lagerabstand kann auf einfache Weise empirisch ermittelt werden, indem die axiale Lageänderung des Innenrings des Wälzlagers gegenüber dem Außenring bei alleiniger Erwärmung des Innenrings gemessen und danach die erforderliche Dehnungslänge des Rotors berechnet wird. Näherungsweise kann auch der erforderliche Lagerabstand A auch aus dem Durchmesser d der Kugellaufbahn am Innenring und dem Druckwinkel ∝ des Wälzlagers nach der Formel A = d · cot ∝ berechnet werden.

Bei der Ausgestaltung des Elektromotors ist vorgesehen, daß zwischen den Lagerstellen die Statorwicklung und die Rotrowicklung angeordnet sind, wobei ein paßgenaues Bauteil die Statorwicklung umgibt und ein zweites paßgenaues Bauteil innerhalb der Rotorwicklung angeordnet ist.

Mit der Erfindung wird eine außerordentlich steife Lagerung des Rotors ermöglicht, so daß durch das vom Rotor angetriebene Bearbeitungswerkzeug keine die Bearbeitung beeinträchtigende Schwingungen des Rotors hervorgerufen werden können. Die erfindungsgemäße Lagerung ermöglicht außerdem einen einfachen Aufbau und eine einfache Montage und damit eine kostengünstige Herstellung des Elektromotors.

Um im vorherrschenden Betriebszustand des Elektromotors, in welchem der Rotor eine höhere Temperatur hat als das Gehäuse, eine optimale Vorspannung zu haben, sind nach einem weiteren Vorschlag der Erfindung die Abstände der Innenringe und Außenringe der Wälzlager so bemessen, daß die optimale Vorspannung der Wälzlager bei Betriebstemperatur von Rotor und Gehäuse gegeben ist. Hierdurch wird erreicht, daß auch bei unvollständiger Kompensation thermisch bedingter Durchmesseränderungen der Innenringe die Lagervorspannung in der Hauptbetriebsphase optimal ist.

Bei der Ausgestaltung des Elektromotors sind die Wälzlager beider Lagerstellen im Gehäuse und auf dem Rotor jeweils über ein sich zwischen den Lagerstellen erstreckendes paßgenaues Bauteil aneinander abgestützt Hierbei kann zum Ausgleich von herstellungsbedingten Maßabweichungen eines der Bauteile an das zuvor durch Messung in jedem Einzelfall ermittelte Sollmaß angepaßt sein. Die Anpassung kann entweder durch Nacharbeiten des Bauteils oder durch Auswahl des geeigneten Bauteils aus einer vorgefertigten Anzahl von vermessenen Bauteilen unterschiedlicher Abmessung erhalten werden.

Zur Erhöhung der Biegesteifigkeit der Lagerung kann erfindungsgemäß vorgesehen sein, daß jede Lagerstelle zwei Wälzlager in Tandemanordnung aufweist. Hierbei ist es im allgemeinen ausreichend, wenn der zur Konstanthaltung der Vorspannung optimale Abstand der Lagerstellen jeweils auf die Mitte der Tandemanordnungen bezogen wird. Werden an die Konstanthaltung der Lagervorspannung besonders hohe Anforderungen gestellt, so kann der unterschiedliche Abstand zwischen den inneren und äußeren Wälzlagern der Tandemanordnungen durch die Wahl unterschiedlicher Druckwinkel für die inneren und äußeren Lager der Tandemanordnungen ausgeglichen werden.

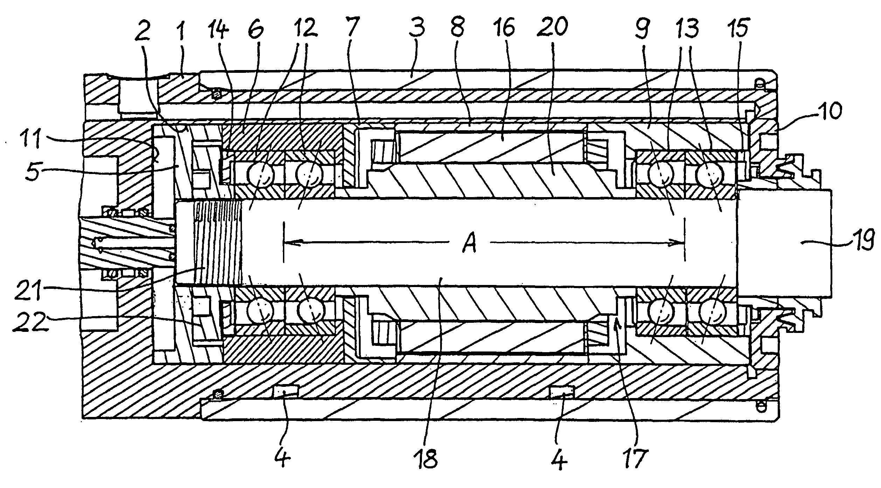

Die Erfindung wird nachfolgend anhand eines Ausführungsbeispiels näher erläutert, das in der Zeichnung dargestellt ist.

Die Zeichnung zeigt einen Längsschnitt durch einen frequenzgesteuerten elektrischen Antriebsmotor einer Motorspindel für den hochtourigen Antrieb von Fräswerkzeugen.

Der Motor weist ein zylindrisches Gehäuse 1 mit einer Zylinderbohrung 2 und einer Mantelhülse 3 auf. In der von der Mantelhülse 3 bedeckten Mantelfläche des Gehäuses 1 ist durch meanderförmige Nuten 4 ein Kanal zum Hindurchleiten eines Kühlmittels gebildet. Die Zylinderbohrung 2 enthält in Reihe hintereinander angeordnet einen ringförmigen Distanzkörper 5, einen hinteren Lagerring 6, eine Ausgleichshülse 7, eine Statorhülse 8 und einen vorderen Lagerring 9. Die genannten Bauteile 5 bis 9 sind mit großer Genauigkeit planparallel ausgeführt und werden mit Hilfe eines in einen Gewindeabschnitt am Eingang der Zylinderbohrung 2 eingeschraubten Gewinderings 10 gegeneinander gespannt, wobei sich der Distanzkörper 5 an einer Bodenfläche 11 der Zylinderbohrung 2 abstützt.

Jeder Lagerring 6, 9 bildet eine Lagerstelle und trägt in Tandemanordnung jeweils zwei als Schulterlager ausgebildete Wälzlager 12 bzw. 13, wobei die Tandemanordnung der Wälzlager 12 und die Tandemanordnung der Wälzlager 13 in O-Anordnung gegeneinander gestellt sind. In Richtung der aufzunehmenden Axialkraft stützen sich die Außenringe der Wälzlager 12 bzw. 13 jeweils an einer Schulter ihres Lagerrings 6 bzw. 9 sowie aneinander ab. In der Gegenrichtung sind die Außenringe der Wälzlager 12 durch einen in den Lagerring 4 eingeschraubten Gewindering 14 gehalten. Die Wälzlager 13 sind in dem Lagerring 9 in der Gegenrichtung an einem Zwischenring 15 abgestützt, der an dem Gewindering 10 anliegt.

In der Statorhülse 8 ist das Statorpaket 16 des Elektromotors bestehend aus Statorwicklung und Polschuhen befestigt.

Die Innenringe der Wälzlager 12, 13 tragen einen Rotor 17 mit einer Welle 18 und einem Rotorkörper 20, der drehfest auf der Welle angeordnet ist und eine Rotorwicklung enthält. Die Welle 18 erstreckt sich durch die Innenringe der Wälzlager 12, 13 hindurch und weist an ihrem vorderen, aus dem Gehäuse 1 herausragenden Ende einen Wellenkopf 19 größeren Durchmessers zur Aufnahme einer Spannkupplung für ein Fräswerkzeug auf. Der Rotorkörper 20 befindet sich zwischen der Lagerstelle der Wälzlager 12 und der Lagerstelle der Wälzlager 13 und weist an seinen Enden planparallele Stirnflächen auf, an denen die dem Rotorkörper 20 benachbarten Innenringe der Wälzlager 12, 13 anliegen. Mit Hilfe einer auf einem Außengewinde 21 am inneren Ende der Welle 18 aufgeschraubten Ringmutter 22 werden die Innenringe der Wälzlager 12, 13 und der Rotorkörper 20 gegeneinander und gegen den Wellenkopf 19 gespannt. Hierbei wird der Abstand, den die Innenringe der Wälzlager 12 von den Innenringen der Wälzlager 13 haben, durch die axiale Länge des Rotorkörpers 20 bestimmt.

Die Vorspannung der Wälzlager 12, 13 wird bei der beschriebenen Anordnung dadurch erreicht, daß der Abstand der Außenringe der Wälzlager 12 von den Außenringen der Wälzlager 13 um einen definierten Betrag kleiner bemessen ist als der Abstand der Innenringe der Wälzlager 12 von den Innenringen der Wälzlager 13. Um in der Praxis den definierten Abstandsunterschied genau einhalten zu können, werden bei der Montage die Bauteile vermessen, welche die Abstände der Innenringe und die Abstände der Außenringe bestimmen und aufgrund des Meßergebnisses wird die Länge der Ausgleichshülse 7 bestimmt, die den gewünschten Abstandsunterschied ergibt.

Die durch Einbau der entsprechend bemessenen Abstandshülse 7 erzielte Vorspannung bleibt auch bei einer Erwärmung des Rotors 17 und der Innenringe der Wälzlager 12, 13 im wesentlichen unverändert, da der Mittenabstand A zwischen den Wälzlagern 12 und den Wälzlagern 13 so groß bemessen ist, daß die Längenausdehnung des Rotors 17 und die damit verbundene Vergrößerung des Abstands zwischen den Innenringen der Wälzlager 12 und den Innenringen der Wälzlager 13 die radiale Ausdehnung der Innenringe der Wälzlager 12, 13 weitgehend kompensiert. Voraussetzung für diese Kompensationswirkung ist abgesehen von der geeigneten Größe des Mittenabstands A der Wälzlagerungen die Tatsache, daß das Gehäuse 1 ausreichend gekühlt ist und infolgedessen seine Temperatur im wesentlichen beibehält. Der Abstand der Außenringe der Wälzlager 12, 13 bleibt daher unverändert, so daß die Zunahme des Abstands der Innenringe sich kompensierend auswirken kann. Es sei noch angemerkt, daß durch die Abstandsunterschiede zwischen den bezogen auf den Rotorkörper 20 innenliegenden Wälzlagern 12, 13 einerseits und den außenliegenden Wälzlagern 12, 13 andererseits eine optimale Kompensation bei gleichem Druckwinkel beider Lager der Tandemanordnungen nicht erreichbar ist. Die Abweichung der tatsächlichen Lagerabstände vom Mittenabstand A der beiden Lageranordnungen ist jedoch andererseits so klein, daß ihre Auswirkung in der Regel vernachlässigt werden kann. Will man zwischen den beiden Lagern der Tandemanordnungen jeweils einen größeren Abstand vorsehen, so kann beispielsweise durch die Verwendung außenliegender Wälzlager mit kleinerem Druckwinkel im Vergleich zu dem Druckwinkel der innenliegenden Wälzlager der Abstandsunterschied ausgeglichen werden.

## Patentansprüche

1. Elektromotor, insbesondere eine Motorspindel zum Antrieb eines Bearbeitungswerkzeugs, mit einem Gehäuse, dessen Temperatur mittels einer Kühleinrichtung im wesentlichen konstant gehalten wird und mit einem Rotor, der in dem Gehäuse an zwei im Abstand voneinander befindlichen Lagerstellen mittels Wälzlagern gelagert ist, wobei zwischen den Lagerstellen die Statorwicklung und die Rotorwicklung angeordnet sind und die Wälzlager beider Lagerstellen in O-Anordnung mit Vorspannung gegeneinander gestellt sind, **dadurch gekennzeichnet, daß** an beiden Lagerstellen die Außenringe der Wälzlager (12, 13) in dem Gehäuse (1) und die Innenringe der Wälzlager (12, 13) auf dem Rotor (17) unverschiebbar befestigt sind und zwischen den Außenringen der Wälzlager (12, 13) ein paßgenaues Bauteil (8), das die Statorwicklung umgibt, und zwischen den Innenringen der Wälzlager (12, 13) ein zweites paßgenaues Bauteil (20) innerhalb der Rotorwicklung drehfest auf der Welle (18) angeordnet ist und daß die Abstände der Innenringe und der Außenringe der Wälzlager (12, 13) zwischen den Lagerstellen so groß bemessen ist, daß eine Erhöhung der Vorspannung infolge der radialen thermischen Ausdehnung der Innenringe der Wälzlager (12, 13) bei Erwärmung des Rotors (17) durch die thermische Längenausdehnung des Rotors (17) im wesentlichen kompensiert wird.

2. Elektromotor nach Anspruch 1, **dadurch gekennzeichnet, daß** die Abstände der Innenringe und der Außenringe der Wälzlager (12, 13) so groß bemessen sind, daß die optimale Vorspannung der Wälzlager (12, 13) bei Betriebstemperatur von Rotor (17) und Gehäuse (1) gegeben ist.

3. Elektromotor nach einem der vorhergehenden Ansprüche, **dadurch gekennzeichnet, daß** die Abstützlänge eines paßgenauen Bauteils an das zuvor durch Messung der anderen, die Vorspannung der Wälzlager (12, 13) bestimmenden Bauteile in jedem Einzelfall ermittelte Sollmaß angepaßt ist.

4. Elektromotor nach einem der vorhergehenden Ansprüche, **dadurch gekennzeichnet, daß** jede Lagerstelle zwei Wälzlager (12 bzw. 13) in Tandemanordnung aufweist.

5. Elektromotor nach Anspruch 4, **dadurch gekennzeichnet, daß** der zur Kompensation der radialen thermischen Ausdehnung der Innenringe der Wälzlager (12, 13) bestimmte Abstand der Lagerstellen jeweils auf die Mitte der Tandemanordnungen der Wälzlager (12, 13) bezogen ist.

6. Elektromotor nach Anspruch 4, **dadurch gekennzeichnet, daß** der zur Kompensation der radialen thermischen Ausdehnung der Innenringe der Wälzlager bestimmte Abstand der Lagerstellen jeweils auf die Mitte der einzelnen Wälzlager der Tandemanordnungen bezogen ist und der unterschiedliche Abstand zwischen den in Bezug auf die Mitte der Lagerstellen inneren und äußeren Wälzlagern der Tandemanordnungen durch unterschiedliche Druckwinkel für die inneren und äußeren Lager der Tandemanordnungen ausgeglichen ist.

## Revendications

1. Moteur électrique, notamment une broche motorisée pour l'entraînement d'un outil d'usinage, avec un carter dont la température est maintenue essentiellement constante au moyen d'un dispositif de refroidissement, et avec un rotor logé au moyen de paliers à roulement dans le carter en deux points d'appui disposés à distance l'un de l'autre, le bobinage du stator et le bobinage du rotor étant disposés entre les points d'appui, et les paliers à roulement des deux points d'appui étant précontraints l'un contre l'autre selon une disposition en O (dos-à-dos), **caractérisé en ce qu'**aux deux points d'appui, la bague extérieure des paliers de roulement (12, 13) est fixée dans le carter (1) de façon à ne pas pouvoir coulisser et la bague intérieure des paliers à roulement (12, 13) est fixée sur le rotor (17) de façon à ne pas coulisser, et un élément de construction ajusté avec précision (8) entoure le bobinage du stator entre les bagues extérieures des paliers à roulement (12, 13) et un deuxième élément de construction ajusté avec précision (20) est disposé bloqué en rotation sur l'arbre (18) à l'intérieur du bobinage du rotor, entre les bagues intérieures des paliers à roulement (12, 13), et **en ce que** les distances des bagues intérieures et des bagues extérieures des paliers à roulement (12, 13) entre les points d'appui sont dimensionnées suffisamment grandes pour qu'une élévation de la précontrainte suite à la dilatation thermique radiale de la bague interne des paliers à roulement (12, 13) lors de l'échauffement du rotor (17) soit essentiellement compensée par la dilatation thermique longitudinale du rotor (17).

2. Moteur électrique selon la revendication 1, **caractérisé en ce que** les distances des bagues intérieures et des bagues extérieures des paliers à roulement (12, 13) sont dimensionnées suffisamment grandes pour que la précontrainte optimale des paliers à roulement (12, 13) soit atteinte à la température de fonctionnement du rotor (17) et du carter (1).

3. Moteur électrique selon l'une des revendications précédentes, **caractérisé en ce que** la longueur d'appui d'un élément de construction ajusté avec précision est ajustée à la dimension théorique des autres éléments de construction ayant une influence sur la précontrainte des paliers à roulement (12, 13), cette dimension théorique étant déterminée préalablement par mesure dans chaque cas.

4. Moteur électrique selon l'une des revendications précédentes, **caractérisé en ce que** chaque point d'appui est muni de deux paliers à roulement (resp. 12, 13) disposés en tandem.

5. Moteur électrique selon la revendication 4, **caractérisé en ce que** la distance des points d'appui déterminée pour compenser la dilatation thermique radiale de la bague intérieure des paliers à roulement (12, 13) est rapportée au centre de chacune des dispositions en tandem des paliers à roulement (12, 13).

6. Moteur électrique selon la revendication 4, **caractérisé en ce que** la distance entre les points d'appui déterminée pour compenser la dilatation de la bague intérieure des paliers à roulement est rapportée à chaque fois au centre de chacun des paliers à roulement des dispositions en tandem et la distance différentielle entre les paliers à roulement intérieurs et extérieurs des dispositions en tandem rapportée au centre des points d'appui est compensée par des angles de pression différents pour les paliers intérieurs et extérieurs des dispositions en tandem.

## Claims

1. Electric motor, in particular a motor spindle for driving a machining tool, comprising a housing of which the temperature is kept substantially constant by means of a cooling device and comprising a rotor which is mounted by means of antifriction bearings at two mutually spaced bearing positions in the housing, the stator winding and the rotor winding being arranged between the bearing positions and the antifriction bearings of the two bearing positions being mutually offset in an O-arrangement with bias, **characterised in that**, at the two bearing positions, the outer races of the antifriction bearings (12, 13) are non-displaceably fixed in the housing (1) and the inner races of the antifriction bearings (12, 13) are non-displaceably fixed on the rotor (17), and a tight-fitting component (8) which surrounds the stator winding is arranged between the outer races of the antifriction bearings (12, 13) and a second tight-fitting component (20) is fixed against rotation on the shaft (18) inside the rotor winding between the inner races of the antifriction bearings (12, 13) and **in that** the spacing of the inner races and the outer races of the antifriction bearings (12, 13) between the bearing positions is dimensioned such that an increase in the bias owing to the radial thermal expansion of the inner races of the antifriction bearings (12, 13) during heating of the rotor (17) is substantially compensated by the longitudinal thermal expansion of the rotor (17).

2. Electric motor according to claim 1, **characterised in that** the spacing of the inner races and outer races of the antifriction bearings (12, 13) is dimensioned such that the optimum bias of the antifriction bearings (12, 13) is achieved at the operating temperature of rotor (17) and housing (1).

3. Electric motor according to any one of the preceding claims, **characterised in that** the support length of a tight-fitting component is adapted to the specified size previously determined in each individual case by measurement of the other components which determine the bias of the antifriction bearings (12, 13).

4. Electric motor according to any one of the preceding claims, **characterised in that** each bearing position comprises two antifriction bearings (12 and 13) in a tandem arrangement.

5. Electric motor according to claim 4, **characterised in that** the spacing between the bearing positions intended to compensate the radial thermal expansion of the inner races of the antifriction bearings (12, 13) is based in each case on the centre of the tandem arrangements of the antifriction bearings (12, 13).

6. Electric motor according to claim 4, **characterised in that** the spacing between the bearing positions intended to compensate the radial thermal expansion of the inner races of the antifriction bearings is based in each case on the centre of the individual antifriction bearings of the tandem arrangements and the different spacing between the inner and outer antifriction bearings of the tandem arrangements, with respect to the centre of the bearing positions, is compensated by different contact angles for the inner and outer bearings of the tandem arrangements.
